# EUROPEAN PATENT APPLICATION

(11) **EP 4 421 635 A1**
(43) Date of publication of application: **28.08.2024**
(21) Application number: 23753102.5
(22) Date of filing: 07.02.2023
(51) Int. Cl.: G06F 9/50, G06F 3/06, G06N 3/08, G06F 11/30

(54) **ELECTRONIC DEVICE FOR ALLOCATING MEMORY RESOURCE TO TASK AND METHOD FOR OPERATING ELECTRONIC DEVICE**

(30) Priority: 08.02.2022 KR 20220016068
(71) Applicant: Samsung Electronics Co., Ltd., Suwon-si, Gyeonggi-do 16677 (KR)
(72) Inventor: HONG, Gyeonghwan, Suwon-si, Gyeonggi-do 16677 (KR); KIM, Chulmin, Suwon-si, Gyeonggi-do 16677 (KR); SUK, Sooyong, Suwon-si, Gyeonggi-do 16677 (KR); CHA, Hyunjoon, Suwon-si, Gyeonggi-do 16677 (KR)
(74) Representative: HGF
(86) International application number: PCT/KR2023/001697
(87) International publication number: WO 2023/153752

(57) **Abstract**

An electronic device according to various embodiments includes a memory, memory resource allocation hardware, and a processor, wherein the processor is configured to measure a response time of a task, to collect at least one profile including information related to memory resource allocation for the task and response time information of the task in the memory resource allocation, to determine memory resource allocation for minimizing the response time of the task based on the profile, to configure the memory resource allocation to the task based on memory resource allocation information for minimizing the response time, and to control the memory resource allocation hardware based on the information of the task and the configured resource allocation information, and wherein the memory resource allocation hardware allocates memory resources for the task based on the configured resource allocation information. In addition, various embodiments are possible.

## Description

### [Technical Field]

Various embodiments disclosed in this document relate to an electronic device for allocating memory resources to a task and an operating method of the electronic device. Specifically, various embodiments disclosed in this document relate to an electronic device for allocating optimal memory resources to minimize a response time and an operating method of the electronic device.

### [Background Art]

In recent digital devices, due to technological developments in processors and memories, various applications may be installed in addition to applications provided by manufacturers. In addition, the digital device may simultaneously execute a plurality of applications.

The existing computing structure has memory resources including cache and main memory (e.g., DRAM), and a plurality of CPU cores and auxiliary processors (e.g., GPU, DSP, or NPU) share and use the memory resources. However, as the types and number of cores of these processors increase, the frequency of competition for memory resources increases, resulting in a decrease in a cache hit ratio or inability to utilize the performance of the processor due to a memory bandwidth.

In the existing micro-architecture, a memory partitioning technology that allocates memory resources used by a plurality of tasks or auxiliary processors and monitors a memory resource usage (cache usage or memory bandwidth usage) in a specific task or an auxiliary processor has been applied. Examples of the memory partitioning technology include resource director technology (RDT), platform QoS, and memory partitioning and monitoring (MPAM).

Meanwhile, in a mobile environment, since the execution time of each task is shorter than in a server environment, and a task launch time at the beginning of the operation of the task determines user experience, it is important to allocate appropriate memory resources from the beginning of the task operation in the mobile environment. Therefore, it is difficult to improve the user experience by allocating memory resources based on feedback information after the task operation.

In addition, in the mobile environment, increasing the cache hit ratio of all tasks is not directly related to improvement of the response time. For example, it is assumed that one foreground task and one background task operate simultaneously and both tasks are memory-intensive tasks. In this case, the response time can be improved by increasing the cache quota of the foreground task to increase the cache hit ratio, but increasing the cache hit ratio of the background task will actually decrease the response time.

### [Disclosure of Invention]

### [Technical Problem]

The existing micro-architecture level memory partitioning technology does not consider the operation of an OS and application in allocating memory resources.

Meanwhile, in the mobile environment, it is important to allocate appropriate memory resources from the beginning of task operation, and increasing the cache hit ratio of all tasks may not be directly related to improvement of the response time.

In order to solve the above problems, the present disclosure proposes a memory partitioning technique at the OS level, and relates to a technique for allocating memory resources in consideration of the characteristics of tasks operating in the mobile environment.

The technical problems to be achieved in this document are not limited to the technical problems mentioned above, and other technical problems not mentioned can be clearly understood by those of ordinary skill in the art to which the present invention belongs from the description below.

### [Solution to Problem]

An electronic device according to various embodiments disclosed in this document includes a memory, memory resource allocation hardware, and a processor, wherein the processor may be configured to measure a response time of a task, to collect at least one profile including information related to memory resource allocation for the task and response time information of the task in the memory resource allocation, to determine memory resource allocation for minimizing the response time of the task based on the profile, to configure the memory resource allocation to the task based on memory resource allocation information for minimizing the response time, and to control the memory resource allocation hardware based on the information of the task and the configured resource allocation information, and wherein the memory resource allocation hardware may allocate memory resources for the task based on the configured resource allocation information.

An operating method of an electronic device according to various embodiments disclosed in this document includes measuring a response time of a task, collecting at least one profile including information related to memory resource allocation for the task and response time information of the task in the memory resource allocation, determining memory resource allocation for minimizing the response time of the task based on the profile, configuring memory resource allocation to the task based on memory resource allocation information for minimizing the response time, and controlling the memory resource allocation hardware based on the information of the task and the configured resource allocation information.

An electronic device according to various embodiments disclosed in this document includes a memory, memory resource allocation hardware, and a processor, wherein the processor may include a response time monitoring module configured to measure a response time of a task, a resource allocation profile table configured to collect at least one profile including information related to memory resource allocation for the task and response time information of the task in the memory resource allocation, a memory resource predictor configured to determine memory resource allocation for minimizing the response time of the task based on the profile, and a memory resource allocator configured to configure memory resource allocation to the task based on memory resource allocation information for minimizing the response time and to transmit the information of the task and the configured resource allocation information to the memory resource allocation hardware.

### [Advantageous Effects of invention]

An electronic device according to various embodiments may allocate memory resources for a memory-intensive task based on the feedback on a response time.

An electronic device according to various embodiments may allocate more memory resources to a task that affects response time among a plurality of tasks and may allocate less memory resources to a task that does not affect the response time, so that the overall response time of the electronic device can be improved.

### [Brief Description of Drawings]

In connection with the description of the drawings, the same or similar reference numerals may be used for the same or similar components.
FIG. 1 is a block diagram illustrating an electronic device in a network environment according to various embodiments.
FIG. 2 is a block diagram illustrating an electronic device according to various embodiments.
FIG. 3 is a diagram illustrating a configuration of a memory partitioning controller and a configuration related to the memory partitioning controller according to various embodiments.
FIG. 4 is a diagram illustrating a configuration of a resource allocation profile (RAP) according to various embodiments.
FIG. 5 is a flowchart illustrating an operation in which a processor allocates an optimal memory resource according to various embodiments.
FIG. 6 is a flowchart illustrating an operation in which a processor identifies a cache-intensive and/or memory-intensive task according to various embodiments.
FIG. 7 is a flowchart illustrating an operation in which a processor collects a resource allocation profile and predicts optimal memory resource allocation according to various embodiments.
FIG. 8 is a flowchart illustrating an operation in which a processor configures memory resource allocation according to various embodiments.
FIG. 9 is a flowchart illustrating an operation in which a processor applies memory resource allocation according to various embodiments.

### [Mode for the Invention]

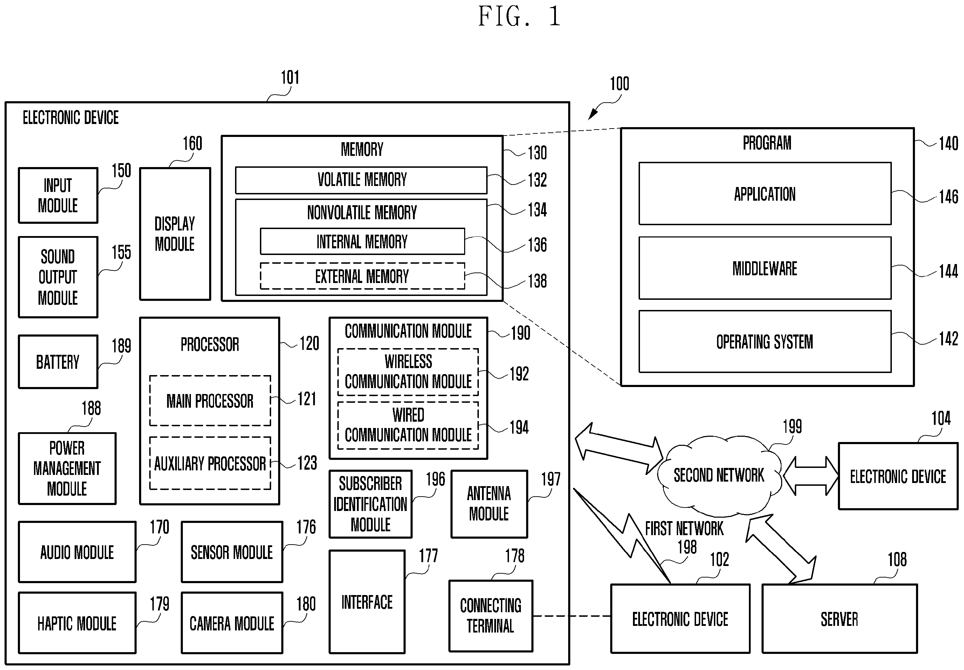

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

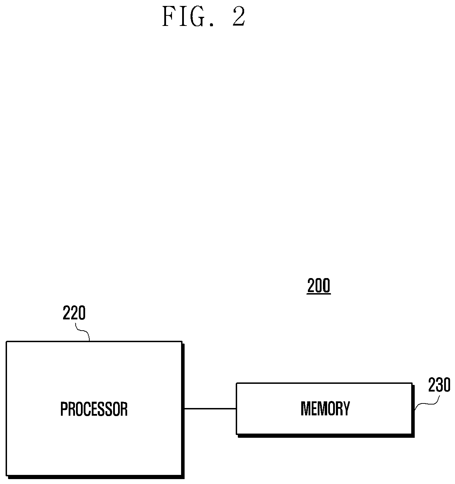

FIG. 2 is a block diagram illustrating an electronic device according to various embodiments.

Referring to FIG. 2, an electronic device 200 (e.g., the electronic device 101 of FIG. 1) may include a processor 220 (e.g., the processor 120 of FIG. 1) and/or a memory 230 (e.g., the memory 130 of FIG. 1). The components included in FIG. 2 are some of the components included in the electronic device 200, and the electronic device 200 may include various other components as shown in FIG. 1.

The memory 230 according to various embodiments may include a cache memory and/or a main memory. The memory 230 according to an embodiment may temporarily or non-temporarily store data requested by a task.

The processor 220 according to various embodiments may allocate an optimal memory resource to a task.

The processor 220 according to an embodiment may identify whether the task is a cache-intensive task and/or a memory-intensive task.

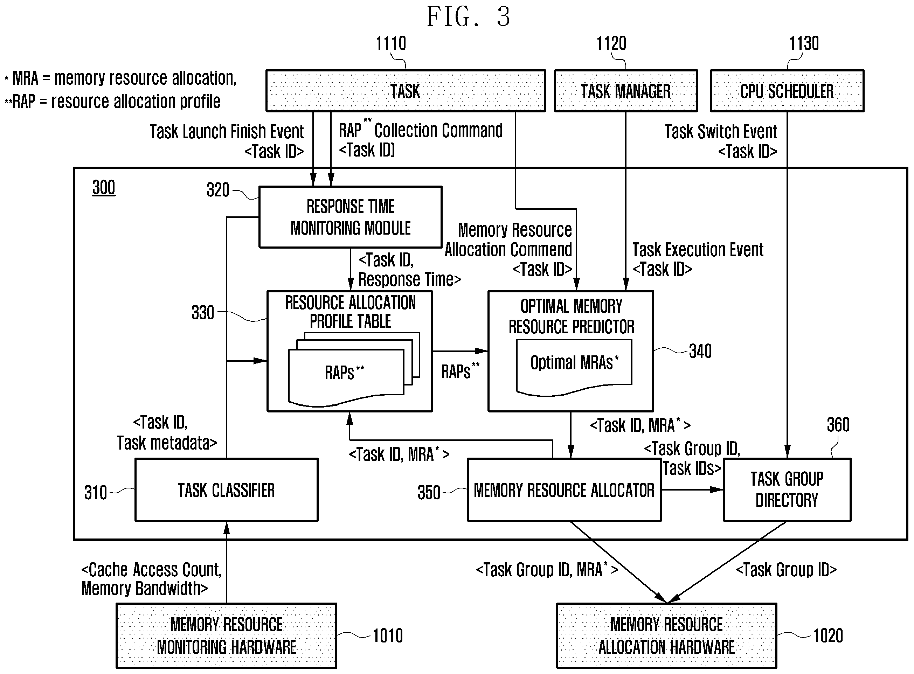

For example, the processor 220 may acquire information related to a cache access count and memory bandwidth of a task from memory resource monitoring hardware (e.g., a memory resource monitoring hardware 1010 of FIG. 3). The processor 220 may collect the cache access count and the memory bandwidth at a specified period.

For example, the processor 220 may classify the task as the cache-intensive task and/or the memory-intensive task based on the cache access count and/or the memory bandwidth.

The processor 220 according to an embodiment may collect a resource allocation profile (RAP).

For example, the processor 220 may measure a response time of a foreground task in response to the foreground task being the cache-intensive task and/or the memory-intensive task.

For example, the processor 220 may store the RAP in a resource allocation profile table (e.g., a resource allocation profile table 330 of FIG. 3). The RAP may include information related to memory resources allocated for a specific task and information related to a response time of a foreground task according to memory resource allocation.

The processor 220 according to an embodiment may predict optimal memory resource allocation (MRA).

For example, the processor 220 may determine optimal MRA using an algorithm based on a designated rule. For example, the processor may determine MRA information having the smallest response time of the foreground task among at least one RAPs of the task as the optimal MRA.

The processor 220 according to an embodiment may configure MRA for a task.

For example, the processor 220 may configure the optimal MRA as the MRA of the task.

For example, the processor 220 may generate a task group by grouping tasks in which MRA is configured in the same manner. For example, the memory resource allocator 350 may generate a task group by grouping tasks having the same cache capacity, memory bandwidth, and priority allocated to the task into one group from MRA information of the task, and may assign a task group ID to the generated task group.

For example, the processor 220 may store the task group ID and information (map of task group ID - task ID) corresponding to the task group ID in a task group directory (e.g., a task group directory 360 of FIG. 3).

For example, the processor 220 may transmit the task group ID and information (map of task group ID - MRA map) corresponding to MRA configuration to the memory resource allocation hardware (e.g., a memory resource allocation hardware 1020 of FIG. 3).

The processor 220 according to an embodiment may apply the configured MRA.

For example, the processor 220 may identify a task ID changed by a CPU scheduler (e.g., a CPU scheduler 1130 of FIG. 3) in response to the occurrence of a task switch event, and may identify a task group ID of the task of which task ID is changed to store the task group ID and information (map of task group ID - task ID) corresponding to the changed task ID in the task group directory 360.

For example, the processor 220 may transmit the task group ID and the information (map of task group ID-task ID) corresponding to the changed task ID to the memory resource allocation hardware 1020.

FIG. 3 is a diagram illustrating a configuration of a memory partitioning controller 300 and a configuration related to the memory partitioning controller 300 according to various embodiments.

A memory resource monitoring hardware 1010 according to various embodiments may monitor information (e.g., cache access count, memory bandwidth) related to memory resources allocated for each CPU core and/or task group.

As an OS-level module or a user-level task such as a task classifier 310 periodically reads a register, the memory resource monitoring hardware 1010 according to an embodiment may provide the corresponding information.

The memory resource monitoring hardware 1010 according to an embodiment may be a module inside a processor related to memory resource partitioning management, and may be controlled by instructions processed by the processor.

The memory resource allocation hardware 1020 according to various embodiments may allocate memory resources to a task group.

As the OS-level module such as the memory resource allocator 350 writes the task group ID and MRA information to a specific register, the memory resource allocation hardware 1020 according to an embodiment may pre-store the memory resource quota of the corresponding task group.

As the OS-level module such as the task group directory 360 records the current task group ID in which a CPU core is executing in a specific register, the memory resource allocation hardware 1020 according to an embodiment may allocate a memory resource suitable for the task group. The memory resource allocation hardware 1020 according to an embodiment may be a module inside the processor related to memory resource partitioning management, and may be controlled by instructions processed by the processor. According to various embodiments, the memory partitioning controller 300 is a module that determines optimal MRA for minimizing the response time for the task, and may configure MRA information for the task and transmit the configured MRA information to the memory resource allocation hardware 1020, based on the information related to the memory resource allocated for each task obtained from the memory resource monitoring hardware 1010.

According to various embodiments, the memory partitioning controller 300 may include a task classifier 310, a response time monitoring module 320, a resource allocation profile table 330, an optimal memory resource predictor 340, a memory resource allocator 350, and/or a task group directory 360.

The task classifier (memory-intensive task classifier) 310 according to various embodiments may classify a task as a cache-intensive task and/or a memory-intensive task. The cache-intensive task may be a task of which a cache access count is greater than or equal to a designated value. The memory-intensive task may be a task of which memory bandwidth is greater than or equal to a designated value.

The task classifier 310 according to an embodiment may acquire information related to the cache access count and memory bandwidth of the task from the memory resource allocation monitoring hardware 1010. The task classifier 310 may collect the cache access count and the memory bandwidth at a designated period.

The task classifier 310 according to an embodiment may classify the task as the cache-intensive and/or memory-intensive task based on the cache access count and memory bandwidth of the task.

The task classifier 310 according to an embodiment may classify all tasks being executed as the cache-intensive and/or memory-intensive tasks.

According to an embodiment, the task classifier 310 may transmit task metadata indicating whether the task is the cache-intensive and/or memory-intensive task, to the response time monitoring module 320.

According to an embodiment, the task classifier 310 may store the task metadata indicating whether the task is the cache-intensive and/or memory-intensive task in the resource allocation profile table.

The response time monitoring module 320 according to various embodiments may be a module for measuring a response time of a foreground task.

According to an embodiment, the response time monitoring module 320 may start an operation according to the occurrence of a task launch finish event and/or a response time monitoring request command (RAP collection command).

According to an embodiment, the response time may be a time from a time when the task requests data to a time when the task is processed. The response time may refer to a response time based on MRA without considering factors (e.g., network status, noise such as hardware interrupts other than memory) that can affect the response time other than the memory.

According to an embodiment, the response time monitoring module 320 may not use the corresponding data in response to the fact that the response time includes the factors (e.g., response time delay due to network status {weak field, base station problem, etc.} and/or response time delay due to hardware interrupt processing time delay {H/W error due to external electrical environment}) that may affect the response time other than the memory.

According to an embodiment, the response time monitoring module 320 may identify whether the task is the cache-intensive and/or memory-intensive task based on the task metadata acquired from the task classifier 310.

According to an embodiment, the response time monitoring module 320 may measure the response time of the foreground task in response to the foreground task being the cache-intensive and/or memory-intensive task, and may transmit the response time of the task to the resource allocation profile table 330.

The resource allocation profile storage 330 according to various embodiments may be a database module that stores a resource allocation profile (RAP). The RAP may include information related to memory resources allocated for a specific task and information related to the response time of the foreground task according to MRA.

According to an embodiment, the RAP may include information related to MRA information, a response time, and metadata (task metadata) of the task.

The MRA information may include information related to the memory resource allocated to a task ID. For example, the MRA information may include a cache capacity allocated to the task, a memory bandwidth, and/or a priority.

The response time may include information indicating the response time according to MRA for the foreground task.

The metadata (task metadata) may include information indicating characteristics of the task (e.g., foreground/background classification of the task, whether the task is the cache-intensive or memory-intensive task).

The RAP table 330 may acquire the metadata (task ID, task metadata) for each task from the task classifier 310, may acquire the response time (task ID, response time) for each task from the response time monitoring module 320, and may acquire the MRA information (task ID, MRA) for each task from the memory resource allocator 350.

The optimal memory resource predictor 340 according to various embodiments may be a module that predicts optimal MRA for the foreground task and/or the background task. The optimal MRA may be MRA configuration when a processing performance indicator level for the task is the highest (e.g., the response time is the lowest).

According to an embodiment, the optimal memory resource predictor 340 may start an operation according to a task execution event and/or a memory resource allocation command.

The optimal memory resource predictor 340 according to an embodiment may acquire the task ID of the foreground task and/or the task ID of the background task.

The optimal memory resource predictor 340 according to an embodiment may predict optimal MRA for each task.

According to an embodiment, the optimal memory resource predictor 340 may determine the optimal MRA of the task using an algorithm based on a designated rule. For example, the optimal memory resource predictor 340 may determine MRA information having the smallest response time of the foreground task among at least one RAP of the task, as the optimal MRA.

According to an embodiment, the optimal memory resource predictor 340 may determine optimal MRA using a machine learning-based algorithm. For example, the optimal memory resource predictor 340 may input at least one RAP of the task to the learned model, and may output optimal MRA of the task.

According to an embodiment, the optimal memory resource predictor 340 may store the optimal MRA of the task in an internal storage (optimal MRAs).

The optimal memory resource predictor 340 according to an embodiment may continuously operate in the background.

The memory resource allocator 350 according to various embodiments may configure MRA for the task.

The memory resource allocator 350 according to an embodiment may configure the optimal MRA of the task determined by the optimal memory resource predictor 340 as the MRA of the task.

The memory resource allocator 350 according to an embodiment may generate a task group by grouping tasks for which MRA is configured in the same manner. For example, the memory resource allocator 350 may generate a task group by grouping tasks having the same cache capacity, memory bandwidth, and priority allocated to the task from the MRA information of the task.

The memory resource allocator 350 according to an embodiment may assign a task group ID to the generated task group.

The memory resource allocator 350 according to an embodiment may store task group ID and information (map of task group ID - task ID) corresponding to the task group ID in the task group directory 360.

The memory resource allocator 350 according to an embodiment may transmit the task group ID and information (map of task group ID - MRA map) corresponding to MRA configuration to the memory resource allocation hardware 1020.

The task group directory 360 according to various embodiments may be a module that stores the task group ID and the information (map of task group ID - task ID) corresponding to the task group ID.

According to an embodiment, the task group directory 360 may identify the task ID changed by a CPU scheduler 1130 in response to the occurrence of a task switch event, and may identify a task group ID of the task of which task ID is changed to store the task group ID and information (map of task group ID - task ID) corresponding to the changed task ID.

The task group directory 360 may transmit the task group ID and information (map of task group ID - task ID) corresponding to the changed task ID to the memory resource allocation hardware 1020.

Accordingly, the memory resource allocation hardware 1020 may identify the task group ID for the task even when the task switch event occurs.

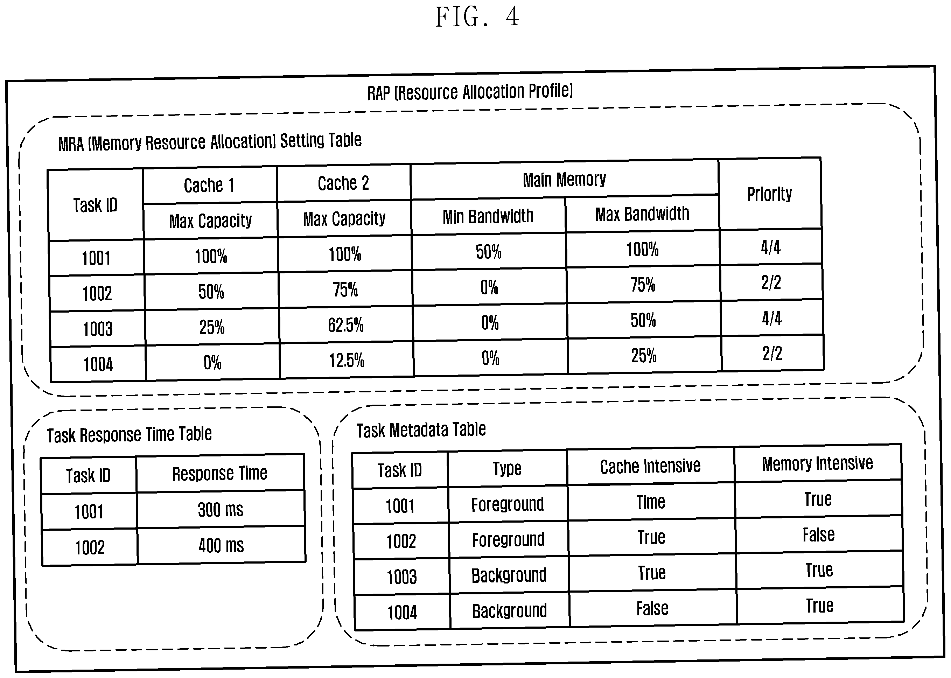

FIG. 4 is a diagram illustrating a configuration of a RAP according to various embodiments.

The RAP may be a portion of data stored in a RAP table (e.g., the RAP table 330 of FIG. 3).

The RAP may include task-specific MRA information (MRA setting table), task-specific response time (task response time table), and/or task-specific metadata (task metadata table).

The MRA information (MRA setting table) may include information related to memory resources allocated for each task (task ID). For example, the MRA information may include a cache capacity, a memory bandwidth, and a priority allocated to the task.

Although not shown in FIG. 4, for example, the MRA information may include cache portion bitmap information.

For example, a cache partitioning method may use a max capacity method of allocating an area of a designated ratio regardless of the location of the cache, and a cache portion bitmap method of dividing a cache space by a designated number and allocating the cache to the designated space in the divided space.

For example, a method of dividing the memory bandwidth may use a max capacity method of maximally allocating up to a designated ratio regardless of time division when time-division multiplexing (TDM) is performed on the memory bandwidth, a cache portion bitmap method of allocating to a designated time division when TDM is performed on the memory bandwidth, and/or a proportional-stride method of allocating a cost for each task group and allocating the memory bandwidth in inverse proportion to the cost of the task group.

The task response time table may include information indicating a response time for each task (task ID) of the foreground task.

The task metadata table may include information indicating characteristics of the task for each task (task ID) (e.g., foreground/background classification of the task, whether the task is the cache-intensive or memory-intensive task).

The RAP table 330 may acquire metadata (task ID, task metadata) for each task from a task classifier (e.g., the task classifier 310 of FIG. 3), may acquire the response time (task ID, response time) for each task from a response time monitoring module (e.g., the response time monitoring module 320 of FIG. 3), and may acquire the MRA information (task ID, MRA) for each task from a memory resource allocator (e.g., the memory resource allocator 350 of FIG. 3).

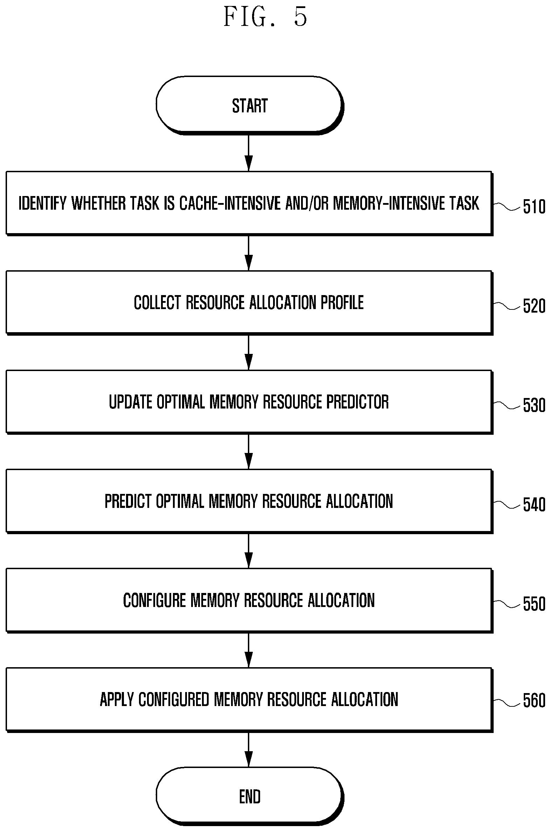

FIG. 5 is a flowchart illustrating an operation in which a processor (e.g., the processor 220 of FIG. 2) allocates an optimal memory resource according to various embodiments.

According to various embodiments, in operation 510, the processor 220 may determine whether a task is a cache-intensive and/or memory-intensive task.

The processor 220 according to an embodiment may acquire information related to a cache access count and memory bandwidth of a task from the memory resource allocation monitoring hardware 1010. The processor 220 may collect the cache access count and the memory bandwidth at a designated period.

The processor 220 according to an embodiment may classify the task as the cache-intensive and/or memory-intensive task based on the cache access count and memory bandwidth of the task.

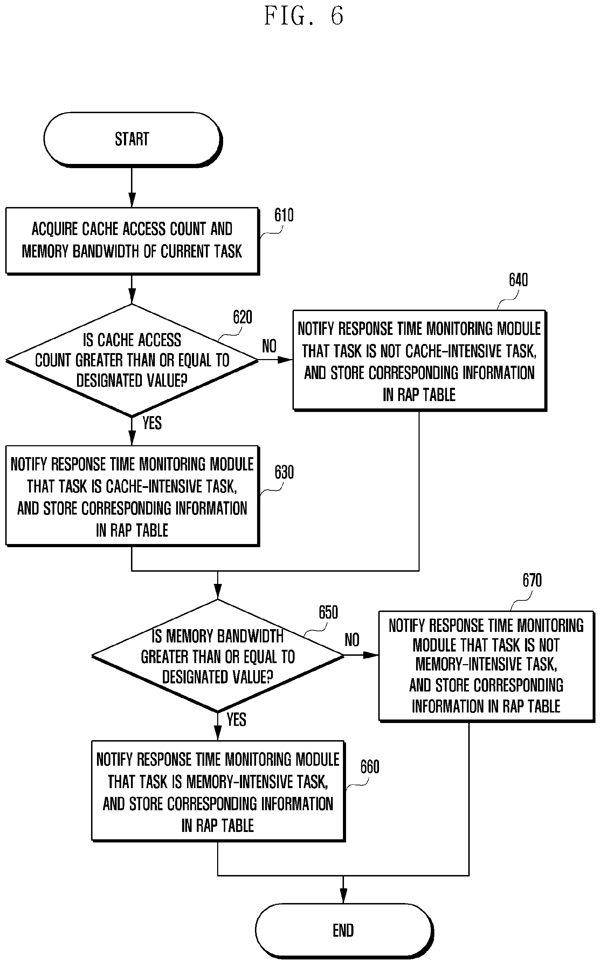

Operation 510 will be described in detail later in the description related to FIG. 6.

According to various embodiments, in operation 520, the processor 220 may collect a RAP.

According to an embodiment, operation 520 may be started by the occurrence of a task launch finish event and/or a response time monitoring request command (RAP collection command).

According to an embodiment, the processor 220 may measure a response time of a foreground task in response to the foreground task being the cache-intensive and/or memory-intensive task.

According to an embodiment, the processor 220 may store a RAP in a resource allocation profile table (e.g., the resource allocation profile table 330 of FIG. 3). The RAP may include information related to memory resources allocated for a specific task and information related to the response time of the foreground task according to MRA.

According to various embodiments, in operation 530, the processor 220 may update an optimal memory resource predictor (e.g., the optimal memory resource predictor 340 of FIG. 3).

The processor 220 according to various embodiments may update the optimal memory resource predictor 340 in response to the fact that an update count of the RAP table is greater than or equal to a designated value and the electronic device is in an idle state.

According to various embodiments, in operation 540, the processor 220 may predict optimal MRA.

According to an embodiment, the processor 220 may determine optimal MRA of the task using an algorithm based on a designated rule. For example, the processor 220 may determine MRA information having the smallest response time of the foreground task among at least one RAP of the task, as the optimal MRA.

According to an embodiment, the processor 220 may determine the optimal MRA using a machine learning-based algorithm. For example, the processor 220 may input at least one RAP of the task to the learned model, and may output the optimal MRA of the task.

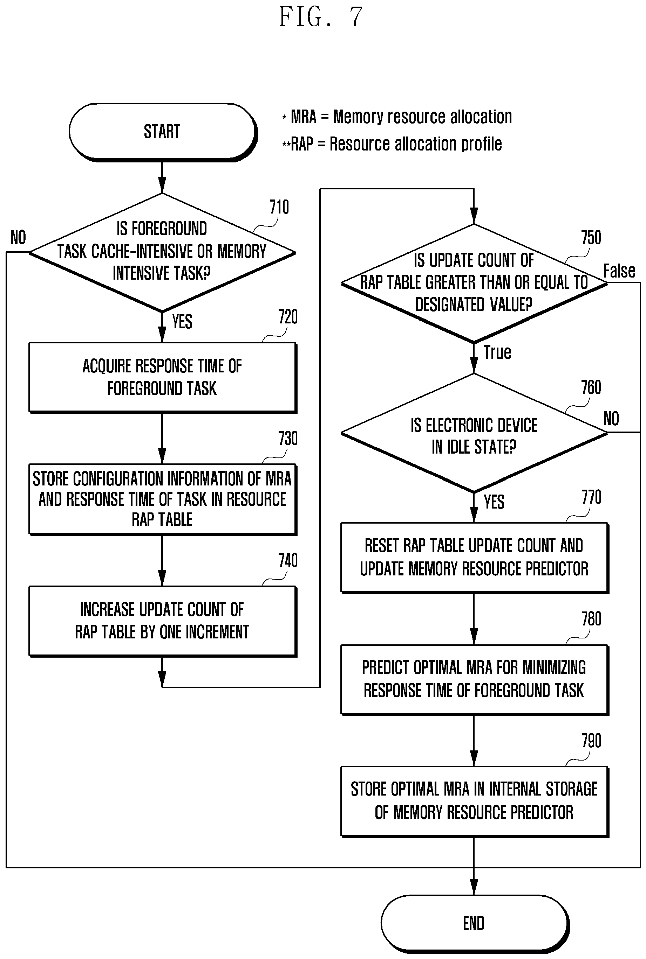

Operations 520 to 540 will be described in detail later in the description related to FIG. 7.

According to various embodiments, in operation 550, the processor 220 may configure MRA for the task.

The processor 220 according to an embodiment may configure the optimal MRA of the task as the MRA of the task.

The processor 220 according to an embodiment may generate a task group by grouping tasks of which MRA is configured in the same manner. For example, a memory resource allocator (e.g., the memory resource allocator 350 of FIG. 3) may generate a task group by grouping tasks having the same cache capacity, memory bandwidth, and priority allocated to the task into one group, from the MRA information of the task.

The processor 220 according to an embodiment may assign a task group ID to the generated task group.

The processor 220 according to an embodiment may store the task group ID and information (map of task group ID - task ID) corresponding to the task group ID in a task group directory (e.g., the task group directory 360 of FIG. 3).

The processor 220 according to an embodiment may transmit the task group ID and information (map of task group ID - MRA map) corresponding to MRA configuration to memory resource allocation hardware (e.g., the memory resource allocation hardware 1020 of FIG. 3).

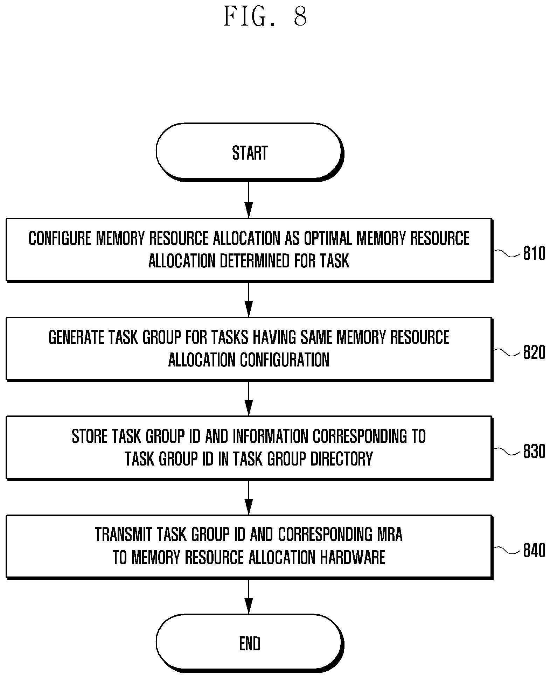

Operation 550 will be described in detail later in the description related to FIG. 8.

According to various embodiments, in operation 560, the processor 220 may apply the configured MRA.

According to an embodiment, in response to the occurrence of a task switch event, the processor 220 may identify a task ID changed by a CPU scheduler (e.g., the CPU scheduler 1130 of FIG. 3), and may identify a task group ID of the task of which task ID is changed to store the task group ID and information (map of task group ID - task ID) corresponding to the changed task ID in the task group directory 360.

According to an embodiment, the processor 220 may transmit the information (map of task group ID - task ID) corresponding to the task group ID and the changed task ID to memory resource allocation hardware (e.g., the memory resource allocation hardware 1020 of FIG. 3).

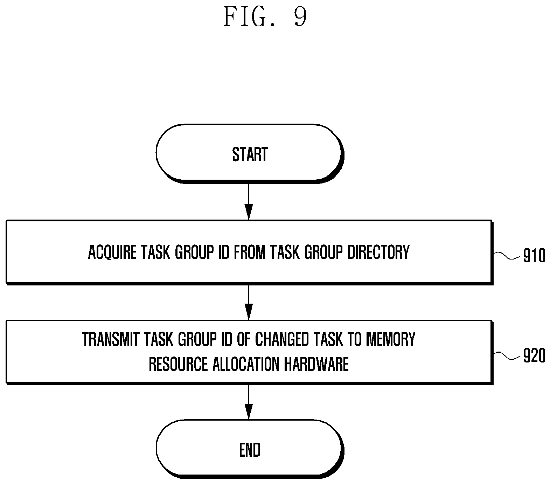

Operation 560 will be described in detail later in the description related to FIG. 9.

FIG. 6 is a flowchart illustrating an operation in which a processor (e.g., the processor 220 of FIG. 2) identifies a cache-intensive and/or memory-intensive task according to various embodiments.

According to various embodiments, FIG. 6 may be a flowchart of a detailed operation of operation 510 of FIG. 5.

According to various embodiments, in operation 610, the processor 220 may acquire information related to a cache access count and memory bandwidth of a task from memory resource monitoring hardware (e.g., the memory resource monitoring hardware 1010 of FIG. 3). The processor 220 may collect the cache access count and the memory bandwidth at a designated period using a task classifier (e.g., the task classifier 310 of FIG. 3).

According to various embodiments, in operation 620, the processor 220 may determine whether the cache access count is equal to or greater than a designated value.

According to various embodiments, in operation 630, the processor 220 may provide information (cache-intensive: true) indicating that the task is a cache-intensive task to a response time monitoring module (e.g., the response time monitoring module 320 of FIG. 3) in response to the fact that the cache access count is equal to or greater than the designated value (operation 620 - YES), and may store the information (cache-intensive: true) indicating that the task is the cache-intensive task in a RAP table (e.g., the RAP table 330 of FIG. 3).

According to various embodiments, in operation 640, the processor 220 may provide information (cache-intensive: false) indicating that the task is not the cache-intensive task to the response time monitoring module 320 in response to the fact that the cache access count is less than the designated value (operation 620 - NO), and may store the information (cache-intensive: false) indicating that the task is not the cache-intensive task in the RAP table 330.

According to various embodiments, in operation 650, the processor 220 may determine whether the memory bandwidth is equal to or greater than a designated value.

According to various embodiments, in operation 660, the processor 220 may provide information (memory-intensive: true) indicating that the task is a memory-intensive task to the response time monitoring module 320 in response to the fact that the memory bandwidth is equal to or greater than the designated value (operation 650 - YES), and may store the information (memory-intensive: true) indicating that the task is a memory-intensive task in the RAP table 330.

According to various embodiments, in operation 670, the processor 220 may provide information (memory-intensive: false) indicating that the task is not the memory-intensive task to the response time monitoring module 320 in response to the fact that the memory bandwidth is less than the designated value (operation 650 - NO), and may store the information (memory-intensive: false) indicating that the task is not the memory-intensive task in the RAP table 330.

FIG. 7 is a flowchart illustrating an operation in which the processor 220 collects a resource allocation profile and predicts optimal memory resource allocation according to various embodiments.

According to various embodiments, FIG. 7 may be a flowchart of detailed operations 520, 530, and 540 of FIG. 5.

According to various embodiments, the operation of FIG. 7 may be started by the occurrence of a task launch finish event and/or a response time monitoring request command (RAP collection command).

According to various embodiments, in operation 710, the processor 220 may determine whether a foreground task is a cache-intensive and/or memory-intensive task. The cache-intensive task may be a task of which a cache access count is greater than or equal to a designated value. The memory-intensive task may be a task of which a memory bandwidth is greater than or equal to a designated value.

According to an embodiment, the processor 220 may determine whether the task is the cache-intensive and/or memory-intensive task based on information acquired from a task classifier (e.g., the task classifier 310 of FIG. 3).

According to various embodiments, the processor 220 may terminate the operation in response to the foreground task being not the cache-intensive and memory-intensive task (operation 710 - NO).

According to various embodiments, in operation 720, the processor 220 may acquire a response time of the foreground task in response to the foreground task being the cache-intensive and/or memory intensive task (operation 710 - YES).

For example, the processor 220 may acquire the response time of the foreground task by using a response time monitoring module (e.g., the response time monitoring module 320 of FIG. 3).

According to various embodiments, in operation 730, the processor 220 may store the response time of the task and MRA information in a RAP table (e.g., the RAP table 330 of FIG. 3).

The response time may include information indicating a response time according to MRA of the foreground task.

The MRA information may include information related to a memory resource allocated to a task ID. For example, the MRA information may include a cache capacity, memory bandwidth, and/or priority allocated to the task.

The processor 220 may acquire a response time (task ID, response time) for each task from the response time monitoring module 320 and acquire MAR information for each task from a memory resource allocator (e.g., the memory resource allocator 350 of FIG. 3) to store the acquired information in the RAP table 330.

According to various embodiments, in operation 740, the processor 220 may increase an update count of the resource allocation profile table 330 by one increment.

For example, the update count corresponds to the number of RAPs stored in the RAP table 330, and the processor 220 may increase the update count by one increment in response to addition of the RAP to the RAP table 330.

According to various embodiments, in operation 750, the processor 220 may determine whether the update count of the RAP table 330 is equal to or greater than a designated value.

According to various embodiments, the processor 220 may terminate the operation in response to the update count of the RAP table 330 being less than the designated value (e.g., operation 750 - NO).

According to various embodiments, in operation 760, the processor 220 may determine whether the electronic device is in an idle state in response to the update count of the RAP table 330 being greater than or equal to the designated value (e.g., operation 750 - YES).

According to various embodiments, the processor 220 may terminate the operation in response to the electronic device (e.g., the electronic device 200 of FIG. 2) not being in the idle state (e.g., operation 760 - NO).

According to various embodiments, in operation 770, in response to the electronic device 200 being in the idle state (e.g., operation 760 - YES), the processor 220 may reset the update count of the RAP table 330 and may update the optimal memory resource predictor 340.

According to an embodiment, based on at least one RAP stored in the RAP table 330, the processor 220 may update an algorithm (e.g., a machine learning-based learning model) of the optimal memory resource predictor 340.

According to various embodiments, in operation 790, the processor 220 may predict optimal MRA that minimizes the response time of the foreground task. The optimal MRA may be MRA configuration when a processing performance indicator level for the task is the highest (e.g., the response time is the lowest).

The processor 220 according to an embodiment may predict the optimal MRA for each task by using the optimal memory resource predictor 340.

For example, the processor 220 may determine the optimal MRA of the task using an algorithm based on a designated rule. For example, the processor 220 may determine MRA having the smallest response time of the foreground task among at least one RAP of the task, as the optimal MRA.

For example, the processor 220 may determine the optimal MRA of the task using a machine learning-based algorithm. For example, the processor 220 may input at least one RAP of the task to the learned model and may output the optimal MRA of the task.

According to various embodiments, in operation 790, the processor 220 may store the optimal MRA of the task in an internal storage (optimal MRAs) of the optimal memory resource predictor 340.

FIG. 8 is a flowchart illustrating an operation in which a processor (e.g., the processor 220 of FIG. 2) configures memory resource allocation according to various embodiments.

According to various embodiments, FIG. 8 may be a flowchart of a detailed operation of operation 550 of FIG. 5.

According to various embodiments, the operation of FIG. 8 may be started by a task execution event and/or a memory resource allocation command.

According to various embodiments, in operation 810, the processor 220 may configure MRA based on optimal MRA information determined for the task.

According to an embodiment, the processor 220 may configure the optimal MRA determined using the optimal memory resource predictor 340 as the MRA of the task.

According to various embodiments, in operation 820, the processor 220 may generate a task group for the tasks having the same MRA configuration.

The processor 220 according to an embodiment may generate a task group by grouping tasks of which MRAs are configured in the same manner using a memory resource allocator (e.g., the memory resource allocator 350 of FIG. 3). For example, in the MRA configuration of the task, the memory resource allocator 350 may generate the task group by grouping tasks having the same cache capacity, memory bandwidth, and priority assigned to the task into one group.

The processor 220 according to an embodiment may assign a task group ID to the generated task group.

According to various embodiments, in operation 830, the processor 220 may store the task group ID and information (map of task group ID - task ID) corresponding to the task ID in a task group directory (e.g., the task group directory 360 of FIG. 3).

According to various embodiments, in operation 840, the processor 220 may transmit the task group ID and information (map of task group ID - MRA) corresponding to MRA configuration in memory resource allocation hardware (e.g., the memory resource allocation hardware 1020 of FIG. 3).

FIG. 9 is a flowchart illustrating an operation in which a processor (e.g., the processor 220 of FIG. 2) applies memory resource allocation according to various embodiments.

According to various embodiments, FIG. 9 may be a flowchart of a detailed operation of operation 560 of FIG. 5.

According to various embodiments, the operation of FIG. 8 may be started by a task switch event.

According to an embodiment, in response to the occurrence of the task switch event, the task ID may be changed by a CPU scheduler (e.g., the CPU scheduler 1130 of FIG. 3).

According to various embodiments, in operation 910, the processor 220 may acquire a task group ID for a changed task from a task group directory (e.g.., the task group directory 360 of FIG. 3).

The task group directory 360 may store information (task group ID - task ID map) corresponding to the task group ID and a task ID.

According to various embodiments, in operation 920, the processor 220 may control memory resource allocation hardware based on the task group ID information for the changed task ID and/or may transmit the task group ID information for the changed task ID to the memory resource allocation hardware.

The processor 220 may use the task group directory 360 to control memory resource allocation hardware (e.g., the memory resource allocation hardware 1020 of FIG. 3) based on the group ID of the task whose task ID is changed.

The processor 220 may transmit the group ID of the task whose task ID is changed to the memory resource allocation hardware 1020 using the task group directory 360. Accordingly, the memory resource allocation hardware 1020 may identify the task group ID for the task even when the task switch event occurs.

An electronic device according to various embodiments may include a memory, memory resource allocation hardware, and a processor, wherein the processor may be configured to measure a response time of a task, to collect at least one profile including information related to memory resource allocation for the task and response time information of the task in the memory resource allocation, to determine memory resource allocation for minimizing the response time of the task based on the profile, to configure the memory resource allocation to the task based on memory resource allocation information for minimizing the response time, and to control the memory resource allocation hardware based on the information of the task and the configured resource allocation information, and the memory resource allocation hardware may allocate memory resources for the task based on the configured resource allocation information.

The electronic device according to various embodiments may further include memory resource monitoring hardware, wherein the processor may be configured to acquire a cache access count and memory bandwidth of the task from the memory resource monitoring hardware before collecting the profile, and to measure the response time of the task in response to the cache access count being greater than or equal to a designated value and/or the memory bandwidth being greater than or equal to a designated value.

In the electronic device according to various embodiments, when determining the memory resource allocation for minimizing the response time of the task, the processor may be configured to determine the memory resource allocation for minimizing the response time based on memory resource allocation information included in the profile having the smallest response time of the task among the at least one profile.

In the electronic device according to various embodiments, when determining the memory resource allocation for minimizing the smallest response time of the task, the processor may be configured to determine the memory resource allocation for minimizing the smallest response time of the task using a designated algorithm, and the designated algorithm may be based on a model trained by machine learning on the at least one profile, and the processor may be configured to update the designated algorithm based on the collected profiles in response to the number of the collected profiles being greater than or equal to a designated value and the electronic device being in an idle state.

In the electronic device according to various embodiments, in a plurality of tasks, the processor may be configured to generate a group for at least one task having the same memory resource allocation information configured in each of the plurality of tasks, and to transmit identification information of the group and the configured memory resource allocation information to the memory resource allocation hardware.

In the electronic device according to various embodiments, in response to a change in the identification information of the task, the processor may be configured to transmit the identification information of the group including the task and identification information of the changed task to the memory resource allocation hardware.

An operating method of an electronic device according to various embodiments may include measuring a response time of a task, collecting at least one profile including information related to memory resource allocation for the task and response time information of the task in the memory resource allocation, determining memory resource allocation for minimizing the response time of the task based on the profile, configuring memory resource allocation to the task based on memory resource allocation information for minimizing the response time, and controlling the memory resource allocation hardware based on the information of the task and the configured resource allocation information.

The operating method of the electronic device according to various embodiments may further include, before the collecting of the at least one profile, acquiring a cache access count and memory bandwidth of the task from memory resource monitoring hardware, and measuring the response time of the task in response to the cache access count being greater than or equal to a designated value and/or the memory bandwidth being greater than or equal to a designated value.

In the operating method of the electronic device according to various embodiments, the determining of the memory resource allocation for minimizing the response time of the task based on the profile may include determining the memory resource allocation for minimizing the response time based on memory resource allocation information included in the profile having the smallest response time of the task among the at least one profile.

In the operating method of the electronic device according to various embodiments, the determining of the memory resource allocation for minimizing the response time of the task based on the profile may include determining the memory resource allocation for minimizing the response time using a designated algorithm, the designated algorithm being based on a model trained by machine learning on the at least one profile, and the operating method may further include updating the designated algorithm based on the collected profiles in response to the number of the collected profiles being greater than or equal to a designated value and the electronic device being in an idle state.

The operating method of the electronic device according to various embodiments may further include, in a plurality of tasks, generating a group for at least one task having the same memory resource allocation information configured in each of the plurality of tasks, and transmitting identification information of the group and the configured memory resource allocation information to the memory resource allocation hardware.

The operating method of the electronic device according to various embodiments may further include transmitting, in response to a change in the identification information of the task, the identification information of the group including the task and identification information of the changed task to the memory resource allocation hardware.

An electronic device according to various embodiments may include a memory, memory resource allocation hardware, and a processor, wherein the processor may include a response time monitoring module configured to measure a response time of a task, a resource allocation profile table configured to collect at least one profile including information related to memory resource allocation for the task and response time information of the task in the memory resource allocation, a memory resource predictor configured to determine memory resource allocation for minimizing the response time of the task based on the profile, and a memory resource allocator configured to configure memory resource allocation to the task based on memory resource allocation information for minimizing the response time and to transmit the information of the task and the configured resource allocation information to the memory resource allocation hardware.

The electronic device according to various embodiments may further include memory resource monitoring hardware, wherein the processor may further include a task classifier configured to acquire a cache access count and memory bandwidth of the task from the memory resource monitoring hardware before collecting the profile, and the response time monitoring module may measure the response time of the task in response to the cache access count being greater than or equal to a designated value and/or the memory bandwidth being greater than or equal to a designated value.

In the electronic device according to various embodiments, the memory resource predictor may determine the memory resource allocation for minimizing the response time based on memory resource allocation information included in the profile having the smallest response time of the task among the at least one profile.

In the electronic device according to various embodiments, the memory resource predictor may determine the memory resource allocation for minimizing the response time of the task using a designated algorithm, the designated algorithm being based on a model trained by machine learning on the at least one profile, and the memory resource predictor may update the designated algorithm based on the collected profiles in response to the number of the profiles collected by the RAP table being greater than or equal to a designated value and the electronic device being in an idle state.

In the electronic device according to various embodiments, the memory resource allocator may generate, in a plurality of tasks, a group for at least one task having the same memory resource allocation information configured in each of the plurality of tasks, and may transmit identification information of the group and the configured memory resource allocation information to the memory resource allocation hardware.

The electronic device according to various embodiments may further include a task group directory, wherein the memory resource allocator may store the identification information of the group and the configured memory resource allocation information in the task group directory, and may transmit, in response to a change in the identification information of the task, the identification information of the group including the task stored in the task group directory and the identification information of the changed task to the memory resource allocation hardware.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a memory;
memory resource allocation hardware; and
a processor configured to:
measure a response time of a task;
execute a plurality of tasks including at least one foreground task and at least one background task;
while the plurality of tasks are being executed, generate a plurality of profiles including first memory resource allocation information for each of the plurality of tasks and first response time information for the at least one foreground task;
generate, based on the plurality of profiles for the plurality of tasks, second memory resource allocation information having a response time that is shorter than a first response time corresponding to the first response time information; and
control the memory resource allocation hardware to allocate a memory resource, based on the second memory resource allocation information, so as to reduce a response time of at least one foreground task.

2. The electronic device of claim 1, further comprising:
memory resource monitoring hardware,
wherein the processor is further configured to generate each of the plurality of profiles by:
acquiring a cache access count and memory bandwidth of each of the plurality of tasks from the memory resource monitoring hardware; and
based on at least one of the cache access count being greater than or equal to a designated value or the memory bandwidth being greater than or equal to a designated value, measuring the response time of the at least one foreground task.

3. The electronic device of claim 1, wherein the processor is further configured to generate the second memory resource allocation information based on memory resource allocation information included in a profile having a smallest response time of the at least one foreground task among the plurality of profiles.

4. The electronic device of claim 1, wherein the processor is further configured to:
generate the second memory resource allocation information using a designated algorithm, the designated algorithm being based on a model trained by machine learning on the plurality of profiles; and
based on a number of the generated profiles being greater than or equal to a designated value and the electronic device being in an idle state, update the designated algorithm based on the collected profiles .

5. The electronic device of claim 1, wherein the processor is further configured to:
generate, in the plurality of tasks, a group for at least one task having a same memory resource allocation information configured in each of the plurality of tasks; and
transmit identification information of the group and the configured memory resource allocation information to the memory resource allocation hardware.

6. The electronic device of claim 5, wherein the processor is further configured to, based on a change in the identification information of the task, transmit the identification information of the group comprising the task and identification information of the changed task to the memory resource allocation hardware.

7. An operating method of an electronic device, the operating method comprising:
executing a plurality of tasks including at least one foreground task and at least one background task;
while the plurality of tasks are being executed, generating a plurality of profiles including first memory resource allocation information for each of the plurality of tasks and first response time information for the at least one foreground task;
generating, based on the plurality of profiles for the plurality of tasks, second memory resource allocation information having a response time shorter than first response time corresponding to the first response time information; and
controlling memory resource allocation hardware of the electronic device to allocate a memory resource, based on the second memory resource allocation information, so as to reduce a response time of at least one foreground task.

8. The operating method of claim 7, wherein the generating the plurality of profiles comprises:
acquiring a cache access count and memory bandwidth of each of the plurality of tasks from memory resource monitoring hardware; and
based on at least one of the cache access count being greater than or equal to a designated value or the memory bandwidth being greater than or equal to a designated value, measuring the response time of the at least one foreground task .

9. The operating method of claim 7, wherein the generating the second memory resource allocation information comprises generating the second memory resource allocation information based on memory resource allocation information included in a profile having a smallest response time of the at least one foreground task among the plurality of profiles.

10. The operating method of claim 7, wherein the generating the second memory resource allocation information comprises generating the second memory resource allocation information using a designated algorithm,
wherein the designated algorithm is based on a model trained by machine learning on the plurality of profiles, and
wherein the operating method further comprises, based on a number of the generated profiles being greater than or equal to a designated value and the electronic device being in an idle state, updating the designated algorithm based on the collected profiles.

11. The operating method of claim 7, further comprising:
generating, in the plurality of tasks, a group for at least one task having a same memory resource allocation information configured in each of the plurality of tasks; and
transmitting identification information of the group and the configured memory resource allocation information to the memory resource allocation hardware.

12. The operating method of claim 11, further comprising transmitting, based on a change in the identification information of a task, the identification information of the group comprising the task and identification information of the changed task to the memory resource allocation hardware.

13. An electronic device comprising:
a memory;
memory resource allocation hardware; and
a processor comprising:
a response time monitoring module configured to measure a response time of a task;
a resource allocation profile table configured to obtain at least one profile comprising information related to a memory resource allocation for the task and response time information of the task in the memory resource allocation;
a memory resource predictor configured to determine a memory resource allocation for minimizing the response time of the task based on the at least one profile; and
a memory resource allocator configured to configure memory resource allocation to the task based on memory resource allocation information for minimizing the response time and to transmit the information of the task and the configured resource allocation information to the memory resource allocation hardware.

14. The electronic device of claim 13, further comprising memory resource monitoring hardware,
wherein the processor further comprises a task classifier configured to acquire a cache access count and a memory bandwidth of the task from the memory resource monitoring hardware before the resource allocation profile table obtains the at least one profile, and
wherein the response time monitoring module is further configured to, based on at least one of in response to the cache access count being greater than or equal to a designated value and the memory bandwidth being greater than or equal to a designated value, measure the response time of the task.

15. The electronic device of claim 13, wherein the memory resource predictor is further configured to determine the memory resource allocation for minimizing the response time based on memory resource allocation information included in a profile having a smallest response time of the task among the at least one profile.
